# DEMANDE DE BREVET EUROPEEN

(11) **EP 4 651 000 A1**
(43) Date de publication de la demande: **19.11.2025**
(21) Numéro de dépôt: 25176512.9
(22) Date de dépôt: 14.05.2025
(51) Int. Cl.: G06F 21/57, G06F 21/64, G06F 8/00, G06F 9/50, G06F 11/30

(54) **PROCEDES DE GENERATION ET DE SELECTION D'UN PASSEPORT NUMERIQUE RELATIF A UNE APPLICATION DESTINEE A ETRE DEPLOYEE DANS AU MOINS UNE ENTITE INFORMATIQUE, DISPOSITIFS ET PROGRAMMES D'ORDINATEUR CORRESPONDANTS**

(30) Priorité: 17.05.2024 FR 2405086
(71) Demandeur: Orange, 92130 Issy-les-Moulineaux (FR)
(72) Inventeur: LABIDURIE, Nathalie, 92326 CHATILLON CEDEX (FR); STEPHAN, Emile, 92326 CHATILLON CEDEX (FR); CORBEL, Romuald, 92326 CHATILLON CEDEX (FR)
(74) Mandataire: Cabinet Beau de Loménie

(57) **Abrégé**

L'invention concerne un procédé de génération, par un dispositif électronique, d'au moins un passeport numérique relatif à une application destinée à être déployée dans au moins une entité informatique, ledit passeport numérique comprenant au moins une entrée comprenant des informations relatives à au moins un environnement, dit environnement de développement, dans lequel ladite application est développée.

## Description

### Domaine Technique

La présente invention appartient au domaine général du développement et de la mise en production d'applications et/ou de logiciels.

Elle concerne plus particulièrement la génération d'un passeport numérique relatif à une application destinée à être déployée ainsi que l'instanciation d'un environnement de déploiement de l'application en fonction des informations contenues dans le passeport numérique de l'application.

### Technique antérieure

Dans un contexte de préoccupations croissantes concernant les ressources limitées de la planète, la gestion durable des produits de consommation devient un enjeu majeur.

En effet, les consommateurs, les entreprises et les régulateurs exigent de plus en plus de transparence sur les produits qu'ils utilisent, notamment en ce qui concerne leur origine, leur composition, leur durabilité, leur sécurité, leur consommation énergétique, leur capacité à être recyclé ainsi que sur leur impact environnemental.

Afin de satisfaire à cette demande d'informations, certaines organisations cherchent à promouvoir une économie circulaire ainsi qu'une transition vers une économie plus durable.

L'initiative « *Product Passport »* ou « Passeport Produit » de la Commission européenne s'inscrit dans ce contexte. De manière plus spécifique, cette initiative vise à améliorer la traçabilité des produits mis en circulation sur le territoire de l'Union européenne de leur conception à leur fin de vie en fournissant des informations transparentes et fiables sur leur origine, leur composition, leur impact environnemental et leur durabilité.

De leur côté, les opérateurs de réseaux de télécommunications ont adopté plusieurs stratégies pour réduire leur empreinte écologique et promouvoir la durabilité de leurs infrastructures et des services qu'ils proposent notamment en réduisant la consommation d'énergie de leurs réseaux, en intégrant des principes d'écoconception dans le développement des équipements et des services, visant à réduire la consommation de ressources, la production de déchets et les émissions de gaz à effet de serre tout au long du cycle de vie de ces produits, ou encore en mettant également en place des programmes de recyclage et de gestion des déchets électroniques pour récupérer, réutiliser et recycler les équipements obsolètes ou en fin de vie, contribuant ainsi à réduire l'accumulation de déchets électroniques et à préserver les ressources naturelles.

Si les opérateurs en télécommunications, tout comme d'autres acteurs du secteur des technologies numériques tels que les fournisseurs de services par exemple, sont capables de répondre aux attentes de leurs utilisateurs et des régulateurs en matière de transparence sur les équipements qu'ils utilisent car des données leurs sont fournies par les fabricants de ces équipements, il n'en est pas de même pour les logiciels qu'ils développent ou qu'ils implémentent dans le cadre de leurs activités.

### Exposé de l'invention

La présente invention a pour objectif de remédier à tout ou partie des inconvénients de l'art antérieur, notamment ceux exposés ci-avant, en proposant une solution qui permette de fournir, pour un logiciel ou une application, ou encore un composant d'une application ou un micro service participant à l'application, des informations transparentes et fiables quant à leur origine, leur composition, leur coût environnemental, leur durabilité, leur capacité à être réutilisé dans d'autres environnements dans lesquels elle peut être exécutée.

A cet effet, et selon un premier aspect, l'invention concerne un procédé de génération, par un dispositif électronique, d'au moins un passeport numérique relatif à une application destinée à être déployée dans au moins une entité informatique, ledit passeport numérique comprenant au moins une entrée comprenant des informations relatives à au moins un environnement, dit environnement de développement, dans lequel ladite application est développée.

Corollairement, l'invention concerne un dispositif électronique comprenant :
- un module de génération d'au moins un passeport numérique relatif à une application destinée à être déployée dans au moins une entité informatique, ledit passeport numérique comprenant au moins une entrée comprenant des informations relatives à au moins un environnement, dit environnement de développement, dans lequel ladite application est développée,
- un module de transmission configuré pour transmettre ledit passeport numérique à destination d'au moins un nœud contribuant à un registre partagé dans lequel sont mémorisées des informations relatives à une pluralité de passeports numériques relatifs à des applications destinées à être déployées dans au moins une autre entité informatique.

La présente solution propose de générer, pour chaque version d'une application ou d'un logiciel donné, un passeport numérique comprenant des informations relatives à l'environnement dans lequel elle a été développée.

Un environnement de développement d'un logiciel ou d'une application est un ensemble d'outils, de ressources matérielles et/ou logicielles, utilisés par des développeurs pour générer, tester et déboguer le logiciel ou l'application.

Un tel environnement de développement comprend généralement : des éditeurs de code, des compilateurs/interpréteurs de code, des gestionnaires de versions, des outils de test, ou encore des débogueurs. Enfin, un environnement de développement comprend des serveurs, des machines virtuelles, des conteneurs Docker ou Kubernetes, etc., permettant d'exécuter l'application en cours de développement.

De telles informations relatives à un environnement de développement appartiennent, par exemple, à un groupe comprenant au moins :
- une valeur de la consommation électrique relative au développement de l'application,
- une valeur représentative de la quantité de carbone générée par le développement de l'application,
- une valeur représentative de la quantité d'eau utilisée lors de la fabrication, et/ou du refroidissement et/ou du recyclage, des composants matériels utilisés lors du développement de l'application,
- une liste de métaux utilisée lors de la fabrication des composants matériels utilisés lors du développement de l'application,
- une quantité de métaux utilisée lors de la fabrication des composants matériels utilisés lors du développement de l'application
- un pourcentage de métal recyclé pour au moins l'un des métaux utilisés lors de la fabrication desdits composants matériels,
- un identifiant d'au moins un composant matériel utilisé lors du développement de l'application,
- un identifiant d'une version d'au moins un système d'exploitation d'au moins un composant matériel utilisé lors du développement de l'application,
- un identifiant d'au moins un protocole de transport supporté par l'application,
- un identifiant d'une version d'un système de gestion de nœuds calcul exécutant l'application.

Ces informations relatives à un environnement de développement peuvent comprendre, en outre, des données relatives à la mise en service de certains équipements, ou encore une durée de vie estimée de ces derniers, etc.

De telles informations relatives à un environnement de développement sont obtenues en provenance d'au moins une entité de surveillance dudit au moins un environnement de développement.

Dans des implémentations particulières, les informations relatives audit au moins un environnement de développement sont obtenues en réponse à la transmission, par ledit dispositif électronique, d'une requête en d'informations relatives à un environnement de développement.

Afin de rendre compte au mieux de l'impact environnemental de l'application, un tel passeport numérique est mis à jour tout au long du développement de l'application.

Pour cela, les informations relatives audit au moins un environnement de développement peuvent être obtenues de manière périodique, c'est le cas par exemple de la valeur de la consommation électrique relative au développement de l'application qui peut évoluer au cours du temps, ou de manière asynchrone. Les informations telles que la quantité de métaux utilisée lors de la fabrication des composants matériels utilisés lors du développement de l'application ou encore un identifiant d'au moins un protocole de transport supporté par l'application par exemple, n'évoluant que lorsqu'un changement d'équipement ou de protocole de transport intervient, peuvent être transmisses de manière asynchrone.
- Lorsqu'elles concernent une même version d'une application, les nouvelles informations relatives audit au moins un environnement de développement obtenues sont mémorisées dans ladite au moins une entée du passeport numérique correspondante.

Dans un contexte de développement et de livraison en continu ou CI/CD pour « *continuous integration*/*continuous delivery »* des applications, la mise à jour du passeport numérique permet de documenter de façon précise et exhaustive les différentes mises à jour et les différents changements apportés à l'application et à l'environnement dans lequel cette dernière est développée tout au long de la phase de développement.

L'intégration continue (CI) est une forme d'intégration au cours de laquelle des développeurs enregistrent les codes qu'ils développent dans un dépôt de codes partagés plusieurs fois par jour. Lors de chaque dépôt de code, un outil de compilation automatisé vérifie le code déposé pour s'assurer qu'il n'y a pas d'erreurs et qu'il est prêt à être mis en production. Cela permet une détection précoce d'erreurs.

Les équipes de développement peuvent par conséquent fournir un code contenant peu ou pas d'erreurs à un rythme plus rapide. Un code contenant peu d'erreurs signifie une validation plus rapide, des versions de l'application développée comprenant moins d'erreurs et donc un flux de développement plus efficace et plus facile à faire évoluer.

La livraison continue (CD), quant à elle, suit l'intégration continue et peut être considérée comme une phase de contrôle dans le flux de développement, avant que la version finale de l'application ne soit publiée ou déployée. Une fois les modifications de code validées, ces dernières sont automatiquement livrées.

Avec la livraison continue, l'objectif est de conserver des ensembles de modifications suffisamment petits pour qu'aucune mise à jour de la version principale de l'application ne compromette le statut de l'application finale, si elle n'est pas prête pour la publication. La livraison continue permet aux développeurs de passer moins de temps à effectuer des tests en interne, car elle a pour vocation de garantir que seul un code stable, c'est-à-dire contenant peu ou pas d'erreurs, parvient à la phase de livraison.

Dans d'autres implémentations, lorsque les informations relatives à au moins un environnement de développement obtenues correspondent à un environnement de développement non répertorié dans le passeport numérique, le procédé comprend :
- la création d'une nouvelle entrée correspondant à ce nouvel environnement dans ledit passeport numérique.

Cela est par exemple le cas lorsque l'on change le système d'exploitation d'au moins un composant matériel utilisé lors du développement de l'application, ou lorsque l'on change l'un des composants matériels utilisés lors du développement de l'application.

Lorsqu'une nouvelle version d'une application est développée, un passeport numérique qui lui est dédié est créé. Cela permet un accès simplifié aux données relatives à chaque version d'une même application.

Dans des implémentations particulières, les informations relatives audit au moins un environnement de développement obtenues sont horodatées et signées au moyen d'une clé cryptographique de ladite entité de surveillance.

Cela permet de garantir leur authenticité et leur intégrité.

Dans des implémentations particulières, le procédé objet de l'invention comprend :
- la détermination d'un condensé des informations relatives à au moins un environnement de développement comprises dans au moins l'une desdites entrées dudit passeport numérique.

Un tel condensé est le résultat de l'application d'une fonction de hachage à l'ensemble des informations comprises dans une entrée du passeport numérique. En effet, une fonction de hachage permet d'attribuer à des données de taille variable et arbitraire des indices associés à un tableau de taille fixe. En d'autres termes, une fonction de hachage est une fonction mathématique qui associe des valeurs de taille fixe à des données de taille quelconque.

L'utilisation d'une fonction de hachage dans le cadre du stockage et de l'indexation de données permet d'accéder ces dernières en un temps réduit tout en requérant un espace de stockage raisonnable relativement au volume de données à stocker.

Dans des implémentations particulières, ledit condensé est horodaté et signé au moyen d'une clé cryptographique dudit dispositif électronique.

Cela permet de garantir son authenticité et son intégrité.

Dans des implémentations particulières, le condensé est transmis à destination d'au moins un nœud contribuant à un registre partagé.

On entend par registre partagé un registre mémoire, tel qu'un ou plusieurs serveurs ou une partition d'un disque mémoire, etc. qui peut être décentralisé afin d'en faciliter l'accès. Un tel registre partagé peut en outre être un registre dit inaltérable car dès qu'une information a été inscrite dans ce registre, elle ne peut être supprimée par quiconque. Si une information inscrite dans ce registre doit être modifiée, une telle modification fait l'objet d'une nouvelle entrée dans le registre inaltérable. Ainsi, un tel registre inaltérable contient l'historique de tous les échanges qui y ont été inscrits depuis sa création.

Afin de garantir l'inaltérabilité d'un tel registre, il est par exemple possible de verrouiller en écriture les zones mémoires contenant des informations. Il est également possible de limiter l'accès en écriture au registre à un nombre restreints de nœuds de confiance, etc. L'accès en lecture au registre altérable peut également est restreint à un nombre limité de nœuds.

Un exemple d'un tel registre inaltérable est une chaîne de blocs.

La chaîne de blocs, ou « *blockchain »* en langue anglaise, est une technologie de stockage et de transmission d'informations transparente, sécurisée, et fonctionnant sans organe central de contrôle. Plus particulièrement, une chaîne de blocs est une base de données distribuée, qui contient l'historique de tous les échanges effectués entre ses utilisateurs depuis sa création : les informations envoyées par les utilisateurs et les échanges internes à la base de données sont vérifiés et groupés à intervalles de temps réguliers en blocs, formant ainsi une chaîne. L'ensemble est sécurisé par cryptographie.

Plus précisément, les transactions effectuées entre les utilisateurs du réseau de nœuds contribuant à une chaîne de blocs sont regroupées par blocs. Dans le domaine des chaînes de blocs, une transaction est une action enregistrée dans une chaîne de blocs qui change l'état de cette dernière. Un exemple de transaction peut être le transfert d'un montant en cryptomonnaie d'un compte à un autre ou encore l'inscription de données de positionnement d'un dispositif utilisateur. Chaque bloc est validé par les nœuds du réseau, selon des techniques cryptographiques qui dépendent du type de chaîne de blocs utilisé. Une fois le bloc validé, il est horodaté et ajouté à la chaîne de blocs, à laquelle tous les utilisateurs ont accès. La transaction est alors visible pour l'ensemble des nœuds du réseau. Une fois ajouté à la chaîne de blocs, un bloc ne peut plus être ni modifié ni supprimé, ce qui garantit l'authenticité et la sécurité du réseau.

Il existe des chaînes de blocs publiques, ouvertes à tous, et des chaînes de blocs privées, ou de consortium, dont l'accès et l'utilisation sont limités à un certain nombre d'acteurs définis à l'avance.

Dans des implémentations particulières, un indicateur relatif à au moins l'une desdites informations relatives à au moins un environnement de développement est associé audit condensé préalablement à ladite transmission.

Afin de faciliter l'interrogation du registre partagé, le condensé peut, par exemple, être associé à un indicateur relatif à au moins l'une desdites informations relatives à au moins un environnement de développement.

A titre d'exemple, un tel indicateur peur être représentatif d'une valeur de la consommation électrique relative au développement de l'application ou encore à un indicateur représentatif d'une quantité de métaux utilisée lors de la fabrication des composants matériels utilisés lors du développement de l'application.

Le but de ces indicateurs associés au condensé est de permettre à un acteur souhaitant déployer une application, de pouvoir sélectionner une application en fonction d'informations qui sont importantes de son point de vue.

Dans des implémentations particulières, le procédé de génération d'un passeport numérique comprend en outre :
- la détermination d'un indicateur représentatif d'une consommation énergétique relative au développement de l'application au moyen d'au moins l'une desdites informations relatives à au moins un environnement de développement, ledit indicateur représentatif d'une consommation énergétique étant mémorisé dans ladite au moins une entrée correspondante.

Un tel indicateur, qui peut être une lettre allant de A à G par exemple, représente une valeur de la consommation électrique pour une période donnée, par exemple une année ou une heure, du développement de l'application. Il peut prendre en compte, au-delà de la consommation d'énergie électrique, la quantité d'eau utilisée lors de la fabrication et/ou du recyclage, ou encore une quantité d'autres consommables, tels que des matières plastiques ou du papier, etc.

Selon un deuxième aspect, l'invention a également pour objet un procédé de sélection, par une première entité informatique, d'au moins un passeport numérique relatif à une application destinée à être déployée dans au moins une deuxième entité informatique, ledit passeport numérique comprenant au moins une entrée comprenant des informations relatives à au moins un environnement, dit environnement de développement, dans lequel ladite application est développée, comprenant :
- la transmission, à destination d'au moins un nœud contribuant à un registre partagé dans lequel sont mémorisées des informations relatives à au moins un passeport numérique, d'une demande d'obtention d'un passeport numérique relatif à une application donnée,
- la sélection d'au moins une entrée dudit passeport numérique au moyen d'au moins une valeur d'un indicateur relatif à au moins l'une desdites informations relatives à au moins un environnement de développement,
- la transmission desdites informations relatives à au moins un environnement de développement comprises dans l'entrée sélectionnée à destination d'au moins une entité d'orchestration destinée à déployer un environnement de production de ladite application en fonction desdites informations relatives à au moins un environnement de développement.

De manière corollaire, l'invention concerne une entité informatique comprenant :
- un module de transmission configuré pour transmettre une demande d'obtention d'un passeport numérique relatif à une application destinée à être déployée dans au moins une autre entité informatique, à destination d'au moins un nœud contribuant à un registre partagé dans lequel sont mémorisées des informations relatives à au moins un passeport numérique, ledit passeport numérique comprenant au moins une entrée comprenant des informations relatives à au moins un environnement, dit environnement de développement, dans lequel ladite application est développée,
- un module de sélection configuré pour sélectionner au moins une entrée dudit passeport numérique au moyen d'au moins une valeur d'un indicateur relatif à au moins l'une desdites informations relatives à au moins un environnement de développement,
- un module de transmission configuré pour transmettre lesdites informations relatives à au moins un environnement de développement comprises dans l'entrée sélectionnée à destination d'au moins une entité d'orchestration destinée à déployer, sélectionner ou mettre à jour, un environnement de production de ladite application en fonction desdites informations relatives à au moins un environnement de développement.

Un acteur, tel que par exemple un opérateur en télécommunications, souhaitant implémenter une application de routage de paquets ou une fonction réseau développée par un tiers pourra consulter le registre partagé dans lequel sont stockés différents condensés d'entrées de différents passeports numériques relatifs à une application ou plusieurs applications de routages et leurs différentes versions. En fonction des besoins de cet opérateur en télécommunications et au moyen des indicateurs associés aux différents condensés, ce dernier pourra sélectionner une version de l'application qui satisfait à ses critères.

Par exemple, si pour cet opérateur en télécommunication il est important que l'application puisse être mise en production dans un environnement de production dans lequel les composants matériels comprennent au moins 18% cuivre recyclé et a une classe énergique A, il utilise ces deux critères pour interroger le registre partagé.

Une fois en possession d'un ou plusieurs condensés identifiant des entrées de passeports numériques répondant à ses attentes, l'opérateur en télécommunication peut alors déployer un environnement de production approprié, et dont il connait déjà les performances énergétiques, grâce aux différentes informations contenues dans l'entrée du passeport numérique sélectionnée.

Dans un mode particulier de réalisation, les procédés objets de l'invention sont mis en œuvre par un ordinateur.

A ce titre, l'invention vise également un programme d'ordinateur sur un support d'enregistrement, ce programme étant susceptible d'être mis en œuvre dans un ordinateur ou plus généralement dans un dispositif électronique conforme à l'invention et comportant des instructions adaptées à la mise en œuvre d'un procédé de génération d'un passeport numérique tel que décrit ci-dessus.

L'invention vise également un programme d'ordinateur sur un support d'enregistrement, ce programme étant susceptible d'être mis en œuvre dans un ordinateur ou plus généralement dans une entité informatique conforme à l'invention et comportant des instructions adaptées à la mise en œuvre d'un procédé de sélection d'un passeport numérique tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions d'un programme d'ordinateur tel que mentionné ci-dessus.

Le support d'information ou d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, le support d'information ou d'enregistrement peut être un circuit intégré dans lequel un programme est incorporé, le circuit étant adapté pour exécuter ou pour être utilisé dans l'exécution des procédés selon l'invention.

On peut également envisager, dans d'autres modes de réalisation, que les procédés selon l'invention, le dispositif électronique et l'entité informatique selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig.1] la figure 1 représente un système de génération et de sélection d'un passeport numérique dans lequel les procédés selon l'invention sont mis en œuvre ;
[Fig. 2] la figure 2 représente schématiquement l'architecture matérielle d'un ordinateur sur laquelle s'appuient un serveur LCM et une entité de gestion de déploiement d'applications conformes à l'invention, appartenant au système de communication de la figure 1 ;
[Fig.3] la figure 3 illustre, sous forme d'ordinogramme, les principales étapes des procédés mis en œuvre par un serveur LCM et une entité de gestion de déploiement d'applications selon un exemple de mise en œuvre de l'invention.

### Description des modes de réalisation

La présente invention repose sur la génération, pour chaque version d'une application ou d'un logiciel donné, un passeport numérique comprenant des informations relatives à l'environnement dans lequel elle a été développée. Il est entendu par application tout produit ou service numérique fonctionnant sur un système d'exploitation. Ainsi, lorsque l'on parle d'application, il peut aussi bien s'agir, par exemple, d'un logiciel de traitement de texte, d'une application de diffusion en continu ou *« streaming »* de flux multimédia, d'une librairie destinée à être appelée lors de l'exécution de l'application, ou encore d'un logiciel permettant de faire de l'inspection profonde de paquets de données ou DPI pour « *Deep Packet Inspection ».*

Comme mentionné précédemment, on entend par environnement de développement d'un logiciel ou d'une application au sens de l'invention l'ensemble d'outils, de ressources matérielles et/ou logicielles, utilisés par des développeurs pour générer, tester et déboguer ce logiciel ou cette application.

Un tel environnement de développement comprend généralement : des éditeurs de code, des compilateurs/interpréteurs de code, des gestionnaires de versions, des outils de test, ou encore des débogueurs. Enfin, un environnement de développement comprend des serveurs, des machines virtuelles, des conteneurs Docker ou Kubernetes, etc., permettant d'exécuter l'application en cours de développement.

Le passeport numérique objet de la présente solution a pour but de fournir, pour un logiciel ou une application, des informations transparentes et fiables quant à leur origine, leur composition, leur impact environnemental, leur durabilité, leur capacité à être réutilisé dans d'autres environnements dans lesquels elle peut être exécutée, ainsi que sur leur impact environnemental.

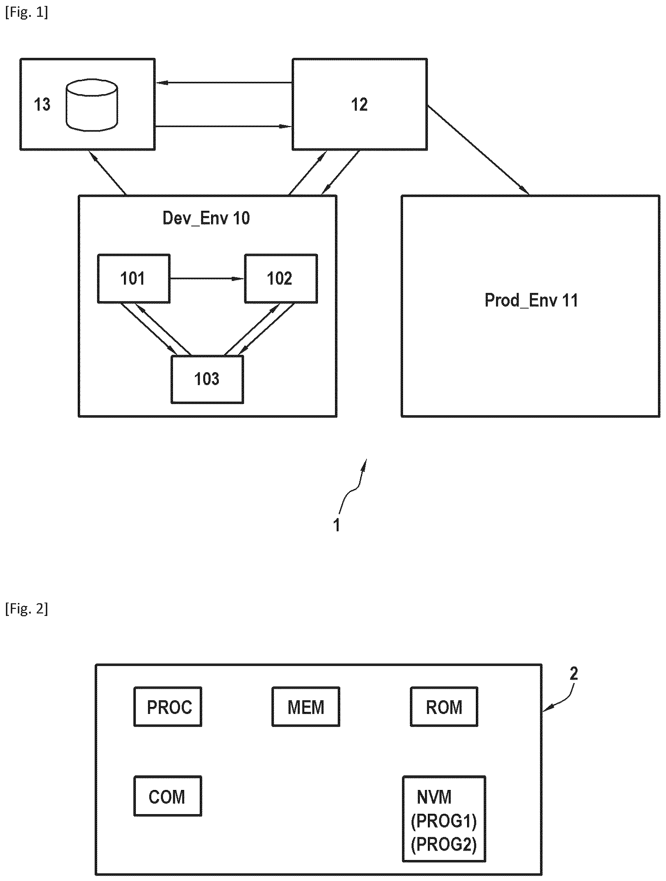

Un système dans lequel un tel passeport numérique est généré et ensuite utilisé est décrit en référence à la **figure 1****.**

Un tel système 1 comprend au moins un environnement de développement 10 d'applications, au moins un environnement de production 11 des applications développées dans l'environnement de développement 10, au moins une entité de gestion de déploiement d'applications 12 et au moins un registre partagé 13. Les interactions entre ces différents entités 10, 11, 12 et 13 seront expliquées plus en détails dans la suite du document.

L'environnement de développement 10 comprend notamment, mais non exclusivement, un serveur de gestion du cycle de vie 101 ou serveur LCM pour « *Life Cycle Management»* dont une fonction est, entre autres, de gérer le cycle de vie des systèmes informatiques, qu'ils soient matériels ou logiciels, de leur provision, en passant par leur exploitation, jusqu'à leur mise hors service lorsqu'ils sont obsolètes.

L'environnement de développement 10 comprend également un groupe 102 ou « *cluster»* de nœuds informatiques, ou de machines de travail ces dernières pouvant être des machines virtuelles, qui exécutent des applications conteneurisées. La conteneurisation est un processus d'exécution et de déploiement logiciel qui regroupe le code d'une application avec tous les fichiers et bibliothèques dont elle a besoin pour s'exécuter sur n'importe quelle infrastructure. Un exemple d'un tel cluster 102 est un cluster Kubernetes. Kubernetes est une solution d'orchestration de conteneurs qui permet de gérer, coordonner et planifier des conteneurs à grande échelle.

Enfin, l'environnement de développement 10 comprend au moins une entité de surveillance 103 de l'environnement de développement 10.

Les interactions entre ces différentes entités 101, 102 et 103 seront expliquées plus en détails dans la suite du document.

Tout comme l'environnement de développement 10, l'environnement de production 11 peut comprendre un serveur LCM, un cluster de nœuds informatiques et au moins une entité de surveillance. Ces éléments constitutifs de l'environnement de production 11 ne sont pas représentés sur les figures.

Les environnements de développement 10 et de productions 11 peuvent également comprendre des dispositifs utilisateurs 101 tel que des smartphones, des téléphones mobiles, des tablettes, ou encore des objets connectés, tel que des véhicules connectés dans lesquels une ou plusieurs applications, pour lesquelles un passeport numérique est généré conformément à l'invention, sont destinées à être exécutées.

L'entité de gestion de déploiement d'applications 12 est par exemple un ordinateur permettant d'interagir avec les environnements de développement 10, de production 11 ainsi qu'avec le registre partagé 13.

Le registre partagé 13 peut consister en un ou plusieurs serveurs ou une partition d'un disque mémoire, etc. Un tel registre partagé peut être décentralisé afin d'en faciliter l'accès. Le tel registre partagé 13 peut en outre être un registre dit inaltérable car dès qu'une information a été inscrite dans ce registre, elle ne peut être supprimée par quiconque. Si une information inscrite dans ce registre doit être modifiée, une telle modification fait l'objet d'une nouvelle entrée dans le registre inaltérable. Ainsi, un tel registre inaltérable contient l'historique de tous les échanges qui y ont été inscrits depuis sa création.

Un exemple d'un tel registre inaltérable est une chaîne de blocs. Dans un tel cas de figure, le registre partagé 13 consiste en un réseau de nœuds contribuant à une chaîne de blocs, comprenant une pluralité de nœuds interconnectés les uns aux autres

Il est à noter que le terme nœud peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Dans le mode de réalisation décrit ici, un nœud comprend une mémoire vive (par exemple une mémoire RAM pour *« Random-Acess Memory*»)*,* une unité de traitement équipée par exemple d'un processeur et pilotée par un programme d'ordinateur, représentatif des instructions de code d'un ou plusieurs contrats intelligents, stockés dans une mémoire morte (par exemple une mémoire ROM pour *« Read-Only Memory*» ou un disque dur), et implémentant un panel de fonctions nécessaires à certification des données destinées à être mémorisées dans la chaîne de blocs.

Dans le mode de réalisation décrit ici, le serveur LCM 101 et l'entité de gestion de déploiement d'applications 12 ont l'architecture matérielle d'un ordinateur 2 telle qu'illustrée à la **figure 2****.** Cette architecture matérielle comprend notamment un processeur PROC, une mémoire vive MEM, une mémoire morte ROM, une mémoire non volatile NVM, et des moyens COM de communication permettant au serveur LCM 101 et à l'entité de gestion de déploiement d'applications 12 de communiquer entre eux et avec le reste des entités du système 1 telles que le registre partagé 13 et les entités 102 et 103. La mémoire non volatile NVM constitue un support d'enregistrement conforme à l'invention, lisible par le processeur PROC et sur lequel sont enregistrés un ou plusieurs programmes conformes à l'invention.

L'un de ces programmes, noté PROG1 lorsque l'architecture matérielle de l'ordinateur 2 est celle du serveur LCM 101, est enregistré dans la mémoire non volatile NVM et comporte des instructions définissant les principales étapes d'un procédé de génération, d'un passeport numérique relatif à une application selon l'invention tel qu'il est mis en œuvre par le serveur LCM 101. Il définit plus spécifiquement les modules fonctionnels du serveur LCM 101, qui s'appuient et/ou commandent tout ou partie des éléments PROC, MEM, ROM, NVM, et COM de l'ordinateur 2 cités précédemment.

Dans le mode de réalisation décrit ici, le programme PROG1 définit notamment les modules fonctionnels suivants du serveur LCM 101 :
- un module de génération configuré pour générer un passeport numérique relatif à une application destinée à être déployée dans au moins une entité informatique,
- un module de transmission configuré pour transmettre le passeport numérique à destination du registre partagé 13.

Le fonctionnement des modules constitutifs du serveur LCM 101 est détaillé davantage ultérieurement en référence aux étapes du procédé de génération d'un passeport numérique relatif à une application selon l'invention.

Le programme d'ordinateur enregistré dans la mémoire non volatile NVM, lorsque l'architecture matérielle de l'ordinateur 2 est celle l'entité de gestion de déploiement d'applications 12, est noté PROG2 et comporte des instructions définissant les principales étapes d'un procédé de sélection d'au moins un passeport numérique relatif à une application selon l'invention tel qu'il est mis en œuvre par l'entité de gestion de déploiement d'applications 12. Il définit plus spécifiquement les modules fonctionnels de l'entité de gestion de déploiement d'applications 12, qui s'appuient et/ou commandent tout ou partie des éléments PROC, MEM, ROM, NVM, et COM de l'ordinateur 2, cités précédemment.

Le programme PROG2 définit notamment les modules fonctionnels de l'entité de gestion de déploiement d'applications 12 :
- un module de transmission configuré pour transmettre une demande d'obtention d'un passeport numérique relatif à une application à destination du registre partagé 13,
- un module de sélection configuré pour sélectionner au moins une entrée d'un passeport numérique,
- un module de transmission configuré pour transmettre des informations relatives à au moins un environnement de développement d'une application donnée à destination d'au moins une entité d'orchestration du groupe 102 de nœuds informatiques.

Le fonctionnement des modules de l'entité de gestion de déploiement d'applications 12 est détaillé davantage ultérieurement en référence aux étapes du procédé de sélection d'au moins un passeport numérique selon l'invention.

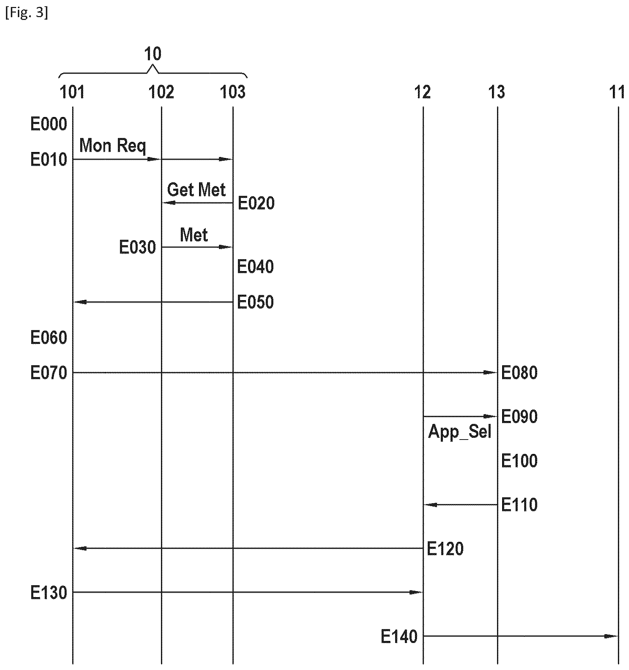

La **figure 3** illustre, sous forme d'ordinogramme, les principales étapes des procédés objets de l'invention permettant la génération et la sélection d'un passeport numérique relatif à une application destinée à être déployée dans au moins une entité informatique mis en œuvre par le serveur LCM 101 et par l'entité de gestion de déploiement d'applications 12 selon un exemple de mise en œuvre de l'invention.

Tel qu'illustré par la figure 3, une première étape E000 est mise en œuvre au cours de laquelle le serveur 101 de l'environnement de développement 11 crée un passeport numérique Pass-App1-V1 relatif à une première version V1 d'une application App1. Ce passeport numérique Pass-App1-V1 comprend au moins une entrée Pass-App1-V1-Ei.

Une telle entrée Pass-App1-V1-Ei comprend une pluralité informations relatives à l'environnement de développement 11 telles que par exemple :
- une valeur de la consommation électrique relative au développement de l'application App1,
- une valeur représentative de la quantité de carbone générée par le développement de l'application App1,
- une valeur représentative de la quantité d'eau utilisée lors de la fabrication des composants matériels utilisés lors du développement de l'application App1,
- une quantité de métaux utilisée lors de la fabrication des composants matériels utilisés lors du développement de l'application App1,
- un pourcentage de métal recyclé pour au moins l'un des métaux utilisés lors de la fabrication desdits composants matériels,
- un identifiant d'au moins un composant matériel utilisé lors du développement de l'application App1,
- un identifiant d'une version d'au moins un système d'exploitation d'au moins un composant matériel utilisé lors du développement de l'application App1,
- un identifiant d'au moins un protocole de transport supporté par l'application APP1,
- un identifiant d'une version d'un système de gestion du groupe 102 de nœuds informatiques,
- des données relatives à la mise en service de certains équipements, ou encore
- une durée de vie estimée de ces derniers, etc.

Chacune de ces informations est regroupée dans un champ dédié de l'entrée Pass-App1-V1-Ei.

Un exemple d'un tel passeport numérique Pass-App1-V1 comprenant trois entrées App1-V1-E1, App1-V1-E2 et App1-V1-E3 est représenté ci-dessous.

| Pass-App1-V1 | App1r | Equip emen t | Proto cole QUIC | Encry ption AES | TCP offloa d engin e | Ssytèm e d'explo itation | Vers ion K8S | Bilan RSE/ Class e énerg étiqu e | Quan tité Cuivr e recycl é (mg) | Quan tité Cuivr e (mg) | efficacité energétiqu e W/Tbits |
|---|---|---|---|---|---|---|---|---|---|---|---|
| E1 | App1-V1 | Proce sseur, RAM, Disqu e | Y | Y | | OS_1 + noyau_ 1 | 1.28 | A | Note_ 1 | Note_ 1 | Note_1 |
| E2 | App1-V1 | Proce sseur, RAM, Disqu e | Y | N | | OS_2+ noyau_ 2 | 1.27 | B | Note_ 2 | Note_ 2 | Note_2 |
| E3 | App1-V1 | Proce sseur, RAM, Disqu e | | NA | | OS_n + noyau_ n | 1.26 | E | Note_ n | Note_ n | Note_n |

Dans l'exemple de passeport numérique ci-dessus, chaque entrée Ei correspond à un environnement de développement dans lequel la version V1 de l'application App1 est développée. Ces différents environnements de développement se distinguent par exemple les uns des autres par l'utilisation d'un processeur ou d'une mémoire RAM différente, ou encore par l'utilisation d'un système d'exploitation différente, etc.

Un tel passeport numérique Pass-App1-V1 comprend dix champs dans l'exemple choisi, il peut bien entendu en comprendre plus ou moins selon le niveau d'informations que l'on souhaite qu'il contienne. Ainsi, un passeport numérique conforme à la présente invention peut comprendre des informations relatives à l'ensembles des composants matériels constitutifs de l'ensemble des serveurs et autres entités informatiques impliquées dans le développement de l'application App1.

Plus particulièrement, le passeport numérique Pass-App1-V1 comprend :
- un premier champ dans lequel sont mémorisées des informations relatives aux composants matériels tels que les processeurs, les mémoires, etc. des équipements constitutifs d'un environnement de développement,
- un deuxième champ dans lequel est indiqué si le protocole QUIC est supporté par l'application App1-V1 pour échanger des données (Y pour oui et N pour non),
- un troisième champ dans lequel est indiqué si le protocole de chiffrement AES est supporté par l'application App1-V1 pour échanger des données (Y pour oui, N pour non, NA pour non applicable),
- un quatrième champ dans lequel est indiqué si le moteur de déchargement TCP est supporté par l'application App1-V1 (Y pour oui et N pour non),
- un cinquième champ dans lequel est indiquée la version du système d'exploitation utilisée,
- un sixième champ dans lequel est indiquée la version de la solution Kubernetes utilisée,
- un septième champ comprenant une valeur du bilan RSE pour « Responsabilité Sociale d'Entreprise » et/ou de la classe énergétique de l'application App1-V1, cette valeur pouvant aller de A à E et représentant la consommation énergétique en kiloWatt x heure ou kWh pour une durée d'utilisation donnée,
- un huitième champ comprenant une quantité, en milligrammes ou mg, de métal ou de matériau rare (dans l'exemple choisi, du cuivre) recyclé compris dans l'ensemble des composants de l'environnement de développement,
- un neuvième champ comprenant une quantité, en milligrammes ou mg, de métal ou de matériau rare (dans l'exemple choisi, du cuivre) compris dans l'ensemble des composants de l'environnement de développement, et enfin
- un dixième champ comprenant une information relative à l'efficacité énergétique de l'application App1-V1 donnée en Watt par térabits ou W/Tbits.

Il convient de noter que le passeport numérique Pass-App1-V1 ainsi décrit concerne une version V1 de l'application App1 et regroupe des informations concernant les différents environnements de développement dans lesquels cette version V1 de l'application App1 a été développée.

Ainsi, lors du développement d'une deuxième version V2 de l'application App1, un passeport numérique correspondant Pass-App1-V2 est créé, ce passeport numérique Pass-App1-V2 comprenant lui aussi autant d'entrées Pass-App1-V2-Ei que d'environnements de développement dans lesquels cette deuxième version V2 de l'application App1 a été développée.

Dans d'autres implémentations de l'invention, un même passeport numérique Pass-App1 regroupe toutes les informations relatives à l'ensemble des versions de l'application App1 qui ont été développées.

Un exemple d'un tel passeport numérique Pass-App1 comprenant trois entrées App1-V1-E1, App1-V1-E2 et App1-V2-E1 est représenté ci-dessous.

| Pass-App1 | App1r | Equip emen t | Proto cole QUIC | Encry ption AES | TCP offloa d engin e | Ssytèm e d'explo itation | Vers ion K8S | Bilan RSE/ Class e énerg étiqu e | Quan tité Cuivr e recycl é (mg) | Quan tité Cuivr e (mg) | efficacité energétiqu e W/Tbits |
|---|---|---|---|---|---|---|---|---|---|---|---|
| E1 | App1-V1 | Proce sseur, RAM, Disqu e | Y | Y | | OS_1 + noyau_ 1 | 1.28 | A | Note_ 1 | Note_ 1 | Note_1 |
| E2 | App1-V1 | Proce sseur, RAM, Disqu e | Y | N | | OS_2+ noyau_ 2 | 1.27 | B | Note_ 2 | Note_ 2 | Note_2 |
| El | App1-V2 | Proce sseur, RAM, Disqu e | | NA | | OS_n + noyau_ n | 1.26 | E | Note_ n | Note_ n | Note_n |

Les informations comprises dans le passeport numérique sont, pour certaines, comme la valeur représentative de la quantité d'eau utilisée lors de la fabrication des composants matériels, la quantité de métaux utilisée lors de la fabrication des composants matériels, ou encore le pourcentage de métal recyclé pour au moins l'un des métaux utilisés lors de la fabrication desdits composants matériels, fournies par les fabricants de ces différents composants matériels, d'autres sont mesurées et /ou calculées tout au long du développement de l'application App1 et propres à la version et à l'environnement de développement de l'application App1. C'est notamment le cas d'information relative à l'efficacité énergétique de l'application App1-V1 donnée en Watt par térabits ou W/Tbits ou encore de la classe énergétique.

Une fois l'environnement de développement 10 déployé et les informations fournies par les fabricants des composants matériels et logiciels des équipements constituant cet environnement de développement 10 obtenues, le serveur LCM 101 transmet une demande de surveillance MonReq des différents équipements constituant l'environnement de développement 10 à destination de l'entité de surveillance 103 dans une étape E010. Il convient de noter que la transmission de la demande de surveillance MonReq n'est pas conditionnée à l'obtention des informations fournies par les fabricants des composants matériels et logiciels des équipements constituant l'environnement de développement 10, ces dernières pouvant être obtenues à tout moment mais préalablement à l'exécution de l'étape E060.

A réception de cette demande de surveillance MonReq, l'entité de surveillance 103 (étape E020) diffuse une demande de collecte de données GetMet à destination des équipements constituant l'environnement de développement 10 et plus particulièrement des nœuds informatiques du groupe 102. Les données destinées à être collectées concernent par exemple la consommation énergétique, le niveau d'utilisation des processeurs, l'efficacité énergétique, etc.

Selon les implémentations, l'entité de surveillance 103 diffuse des demandes de collecte de données GetMet de façon périodique ou non-périodique.

A réception d'une demande de collecte de données GetMet, les équipements constituant l'environnement de développement 10 procèdent à la collecte des informations indiquées dans la demande de collecte de données GetMet.

Un tel équipement du groupe 102 constituant l'environnement de développement 10 transmet alors les données collectées à destination de l'entité de surveillance 103 dans des messages Met (E030).

Ces messages Met peuvent être émis de façon périodique. Dans une autre implémentation, la transmission d'un message Met à destination de l'entité de surveillance 103 peut être déclenchée par la survenue d'un évènement tel que, par exemple, une variation d'une valeur d'une énergie électrique consommée au-delà d'un certain seuil. Dans certaines implémentations, pour un même équipement constitutif de l'environnement de développement 10, certains messages Met peuvent être transmis périodiquement et d'autres lorsqu'un événement donné est survenu.

Afin de garantir l'authenticité et l'intégrité des données collectées, chaque équipement constitutif de l'environnement de développement 10 peut, dans une implémentation particulière de la présente invention, signer le message Met destiné à être transmis à l'entité de surveillance 103 au moyen d'une clé de chiffrement. Les données collectées peuvent également être horodatées.

L'entité de surveillance 103 réceptionne les différents messages Met transmis par les différents équipements constitutifs de l'environnement de développement 10 (E040) et procède à la transmission des données collectées à destination du serveur LCM 101 (E050).

Dans une implémentation particulière, l'entité de surveillance 103 agrège l'ensemble des données collectées et transmet ces dernières à destination du serveur LCM 101 au cours d'une unique transmission. Dans une autre implémentation, l'entité de surveillance 102 transmet les données collectées à la suite de la réception de chaque message Met. Quelle que soit l'implémentation retenue, l'entité de surveillance 103 peut signer les données destinées à être transmises au serveur LCM 101 au moyen d'une clé de chiffrement afin de garantir l'authenticité et l'intégrité de ces données.

Dans une implémentation particulière de la solution objet de l'invention, l'entité de surveillance 103 peut déterminer, préalablement à la transmission à destination du serveur LCM 101, une valeur d'une information à transmettre. Ainsi, l'entité de surveillance 103 peut déterminer une valeur de l'efficacité énergétique au moyen de l'ensemble des données collectées par les différents équipements constitutifs de l'environnement de développement 10 et ne transmettre que cette valeur globale à destination du serveur LCM 101.

De même, l'entité de surveillance 103 peut déterminer, préalablement à la transmission à destination du serveur LCM 101, la valeur de la classe énergétique de l'application App1 au moyen de l'ensemble des données collectées par les différents équipements constitutifs de l'environnement de développement 10. Une telle détermination d'une valeur de la classe énergétique de l'application App1 peut être mise en œuvre au moyen d'un réseau de neurones entraîné à cela.

Dans une autre implémentation particulière de la solution objet de l'invention, c'est le serveur LCM 101 lui-même qui détermine, par exemple une valeur de l'efficacité énergétique au moyen de l'ensemble des données transmise par l'entité de surveillance 103.

De même, le serveur LCM 101 peut déterminer la valeur de la classe énergétique de l'application App1 au moyen des données transmises par l'entité de surveillance 103. Une telle détermination d'une valeur de la classe énergétique de l'application App1 peut être mise en œuvre au moyen d'un réseau de neurones entraîné à cela.

Une fois en possession de l'ensembles des informations nécessaires, le serveur LCM 101 complète le passeport numérique Pass-App1-V1 en mémorisant ces dernières dans les champs idoines de l'entrée Ei correspondante.

Dans une étape E060, le serveur LCM 101 détermine un condensé du passeport numérique Pass-App1-V1. Dans une autre implémentation, un condensé est déterminé pour chaque entrée Ei du passeport numérique Pass-App1-V1.

Ces condensés sont ensuite transmis (E070) à destination du registre partagé 13 dans lequel ils sont mémorisés (E080).

Les passeports numériques et les condensés correspondant sont mémorisés dans le serveur LCM 101 ou dans un autre équipement dédié. Le serveur LCM 101 ou l'équipement dédié peuvent être interrogés de manière sécurisée par un tiers souhaitant accéder au contenu d'un passeport numérique comme cela sera expliqué plus loin.

Afin de faciliter la recherche dans le registre partagé 13, les condensés transmis par le serveur LCM 101 sont associés à des indicateurs relatifs à un ou plusieurs champs du passeport numérique. Ainsi, le condensé 6FE42C8DFE42CC8DFE de l'entrée Pass-App1-V1-E1 est associé à un indicateur RSE identifiant le septième champ du passeport numérique comprenant la classe énergétique de l'application App1-V1. Ainsi l'information suivante : RSE_Classe A_6FE42C8DFE42CC8DFE est transmise à destination de et mémorisée dans le registre partagé 13.

Il est alors possible d'interroger le registre partagé 13 au moyen de différents indicateurs, tels que la classe énergétique, la quantité de cuivre recyclé, l'efficacité énergétique, etc. afin d'obtenir un ou plusieurs passeports numériques répondant aux critères de sélection choisis.

Les étapes E010 à E080 peuvent être mises en œuvre tout au long du développement de l'application App1, ainsi le registre partagé 13 contient un historique de tous les développements de l'application App1. Cela permet de déterminer la compatibilité d'une version d'une application donnée avec un environnement de production constitué d'équipements de générations antérieures utilisés lors du développement. Ces informations de rétrocompatibilité trouvent un intérêt particulier dans le cadre de l'économie circulaire car elles contribuent à rendre attractive l'utilisation d'équipements reconditionnés ou de seconde main leur offrant ainsi une seconde vie.

A chaque modification apportée à l'application ou à l'un des équipements constituant l'environnement de développement, une nouvelle entrée est créée dans un passeport numérique existant ou un nouveau passeport numérique est créé.

Dans une étape E090, le registre partagé 13 reçoit une demande de sélection App-Sel d'un passeport numérique pour une application donnée. Une telle demande de sélection App-Sel peut être émise par l'entité de gestion de déploiement d'applications 12 ou par un équipement appartenant à un particulier désireux d'installer une application dans l'un de ses terminaux utilisateurs. A cette fin, la demande de sélection App-Sel comprend un identifiant de l'application et éventuellement un indicateur, tel que la classe énergétique ou encore un identifiant d'un système d'exploitation ou une version d'un système d'exploitation, ou bien encore une information relative au matériel du terminal utilisateur du particulier, ou une version de l'application déjà installée et pour laquelle une mise à jour est requise etc.

A réception de cette demande de sélection App-Sel, le registre partagé 13 identifie un ou plusieurs passeports numériques ou une ou plusieurs entrées d'un même passeport numérique qui satisfont les critères de sélection compris dans la demande de sélection App-Sel (E100).

Une fois le ou les passeports numériques sélectionnés, le registre partagé 13 transmet les condensés correspondant à l'entité de gestion de déploiement d'applications 12 (E110). Une fois en possession des condensés, l'entité de gestion de déploiement d'applications 12 peut interroger (E120) le serveur LCM 1010 ou tout autre équipement dans lequel les passeports numériques sont stockés afin d'obtenir (E130) une copie des passeports numériques sélectionnés.

Lorsqu'elle se trouve en possession des informations comprises dans les passeports numériques dont elle a obtenu une copie, l'entité de gestion de déploiement d'applications 12 peut alors (E140) être déployée dans un environnement de production 11 conforme à l'environnement de développement 10 correspondant à l'entrée du passeport numérique sélectionné, ou mis à jour pour être mis en conformité avec cet environnement de développement 10. Un tel environnement de production conforme à l'environnement de développement 10 peut également être déployé spécifiquement pour l'exécution de cette application App1. L'application App1 aura alors le même comportement dans cet environnement de production 11 que celui qu'elle avait dans l'environnement de développement 10 correspondant. Dans le cas où la demande de sélection est émise par un équipement d'un particulier, l'entité de gestion de déploiement d'applications 12 met à jour le terminal utilisateur comme requis dans la demande.

## Revendications

1. Procédé de génération, par un dispositif électronique, d'au moins un passeport numérique relatif à une application destinée à être déployée dans au moins une entité informatique, ledit passeport numérique comprenant au moins une entrée comprenant des informations relatives à au moins un environnement, dit environnement de développement, dans lequel ladite application est développée.

2. Procédé de génération d'un passeport numérique selon la revendication 1 comprenant :
- l'obtention desdites informations relatives audit au moins un environnement de développement en provenance d'au moins une entité de surveillance dudit au moins un environnement de développement.

3. Procédé de génération d'un passeport numérique selon la revendication 2, dans lequel l'obtention desdites informations relatives audit au moins un environnement de développement est une réponse à la transmission, par ledit dispositif électronique, d'une requête en d'informations relatives à un environnement de développement.

4. Procédé de génération d'un passeport numérique selon la revendication 3, comprenant :
- l'ajout desdites informations relatives audit au moins un environnement de développement dans ladite au moins une entrée du passeport numérique correspondante.

5. Procédé de génération d'un passeport numérique selon l'une quelconque des revendications précédentes, comprenant, lorsque les informations relatives à au moins un environnement de développement obtenues correspondent à un environnement de développement non répertorié dans le passeport numérique :
- la création d'une nouvelle entrée correspondant à ce nouvel environnement dans ledit passeport numérique.

6. Procédé de génération d'un passeport numérique selon l'une quelconque des revendications précédentes, dans lequel les informations relatives audit au moins un environnement de développement appartiennent à un groupe comprenant au moins :
- une valeur de la consommation électrique relative au développement de l'application,
- une valeur représentative de la quantité de carbone générée par le développement de l'application,
- une valeur représentative de la quantité d'eau utilisée lors de la fabrication, et/ou du refroidissement et/ou du recyclage, des composants matériels utilisés lors du développement de l'application,
- une liste de métaux utilisée lors de la fabrication des composants matériels utilisés lors du développement de l'application,
- une quantité de métaux utilisée lors de la fabrication des composants matériels utilisés lors du développement de l'application
- un pourcentage de métal recyclé pour au moins l'un des métaux utilisés lors de la fabrication desdits composants matériels,
- un identifiant d'au moins un composant matériel utilisé lors du développement de l'application,
- un identifiant d'une version d'au moins un système d'exploitation d'au moins un composant matériel utilisé lors du développement de l'application,
- un identifiant d'au moins un protocole de transport supporté par l'application,
- un identifiant d'une version d'un système de gestion de nœuds calcul exécutant l'application.

7. Procédé de génération d'un passeport numérique selon l'une quelconque des revendications précédentes, comprenant :
- la détermination d'un condensé des informations relatives à au moins un environnement de développement comprises dans au moins l'une desdites entrées dudit passeport numérique.

8. Procédé de génération d'un passeport numérique selon la revendication 7, comprenant :
- la transmission dudit condensé à destination d'au moins un nœud contribuant à un registre partagé.

9. Procédé de génération d'un passeport numérique selon la revendication 8, dans lequel un indicateur relatif à au moins l'une desdites informations relatives à au moins un environnement de développement est associé audit condensé préalablement à ladite transmission.

10. Procédé de génération d'un passeport numérique selon la revendication 9, comprenant en outre :
- la détermination d'un indicateur représentatif d'une consommation énergétique relative au développement de l'application au moyen d'au moins l'une desdites informations relatives à au moins un environnement de développement, ledit indicateur représentatif d'une consommation énergétique étant mémorisé dans ladite au moins une entrée correspondante.

11. Procédé de sélection, par une première entité informatique, d'au moins un passeport numérique relatif à une application destinée à être déployée dans au moins une deuxième entité informatique, ledit passeport numérique comprenant au moins une entrée comprenant des informations relatives à au moins un environnement, dit environnement de développement, dans lequel ladite application est développée, comprenant :
- la transmission, à destination d'au moins un nœud contribuant à un registre partagé dans lequel sont mémorisées des informations relatives à au moins un passeport numérique, d'une demande d'obtention d'un passeport numérique relatif à une application donnée,
- la sélection d'au moins une entrée dudit passeport numérique au moyen d'au moins une valeur d'un indicateur relatif à au moins l'une desdites informations relatives à au moins un environnement de développement,
- la transmission desdites informations relatives à au moins un environnement de développement comprises dans l'entrée sélectionnée à destination d'au moins une entité d'orchestration destinée à déployer un environnement de production de ladite application en fonction desdites informations relatives à au moins un environnement de développement.

12. Programme d'ordinateur comportant des instructions pour la mise en œuvre d'un procédé de génération d'un passeport numérique relatif à une application selon l'une quelconque des revendications 1 à 10, lorsque ledit programme est exécuté par un ordinateur.

13. Programme d'ordinateur comportant des instructions pour la mise en œuvre d'un procédé de sélection d'un passeport numérique relatif à une application selon la revendication 11, lorsque ledit programme est exécuté par un ordinateur.

14. Dispositif électronique comprenant :
- un module de génération d'au moins un passeport numérique relatif à une application destinée à être déployée dans au moins une entité informatique, ledit passeport numérique comprenant au moins une entrée comprenant des informations relatives à au moins un environnement, dit environnement de développement, dans lequel ladite application est développée,
- un module de transmission configuré pour transmettre ledit passeport numérique à destination d'au moins un nœud contribuant à un registre partagé dans lequel sont mémorisées des informations relatives à une pluralité de passeports numériques relatifs à des applications destinées à être déployées dans au moins une autre entité informatique.

15. Entité informatique comprenant :
- un module de transmission configuré pour transmettre une demande d'obtention d'un passeport numérique relatif à une application destinée à être déployée dans au moins une autre entité informatique, à destination d'au moins un nœud contribuant à un registre partagé dans lequel sont mémorisées des informations relatives à au moins un passeport numérique, ledit passeport numérique comprenant au moins une entrée comprenant des informations relatives à au moins un environnement, dit environnement de développement, dans lequel ladite application est développée,
- un module de sélection configuré pour sélectionner au moins une entrée dudit passeport numérique au moyen d'au moins une valeur d'un indicateur relatif à au moins l'une desdites informations relatives à au moins un environnement de développement,
- un module de transmission configuré pour transmettre lesdites informations relatives à au moins un environnement de développement comprises dans l'entrée sélectionnée à destination d'au moins une entité d'orchestration destinée à déployer, sélectionner ou mettre à jour, un environnement de production de ladite application en fonction desdites informations relatives à au moins un environnement de développement.
